# EUROPÄISCHE PATENTSCHRIFT

(11) **EP 2 117 870 B1**
(45) Veröffentlichungstag und Bekanntmachung des Hinweises auf die Patenterteilung: **14.03.2012**
(21) Anmeldenummer: 07822292.4
(22) Anmeldetag: 07.11.2007
(51) Int. Cl.: B60K 28/06

(54) **VERFAHREN UND VORRICHTUNG ZUR FAHRERERMÜDUNGSERKENNUNG MITTELS DREHMOMENTSENSORIK**
METHOD AND DEVICE FOR RECOGNIZING A DRIVER'S TIREDNESS BY MEANS OF TORQUE SENSOR TECHNOLOGY
PROCÉDÉ ET DISPOSITIF POUR DÉTECTER LA FATIGUE D'UN CONDUCTEUR AU MOYEN D'UN SYSTÈME DE DÉTECTION DE COUPLE DE ROTATION

(30) Priorität: 09.01.2007 DE 102007001362
(43) Veröffentlichungstag der Anmeldung: 18.11.2009
(73) Patentinhaber: Robert Bosch GmbH, 70442 Stuttgart (DE)
(72) Erfinder: REICHERT, Andreas, 71720 Oberstenfeld (DE)
(86) Internationale Anmeldenummer: PCT/EP2007/061978
(87) Internationale Veröffentlichungsnummer: WO 2008/083870

(56) Entgegenhaltungen:
- EP-A- 1 645 454
- WO-A-01/60254
- WO-A-02/17787
- WO-A-2007/031619
- DE-A1-102005 057 267
- US-A- 4 463 347
- US-A- 4 496 938
- US-A- 4 564 833

## Beschreibung

### Stand der Technik

Die Erfindung betrifft ein Verfahren zur Erkennung der Ermüdung eines Fahrers eines Fahrzeugs. Die WO 01/60254 A1 offenbart so ein Verfahren, nach dem Oberbegriff von Anspruch 1.

Aus der DE 10 2004 047 136 A1 ist ein Verfahren zum Erlernen der Reaktionen des Fahrers eines Fahrzeugs bekannt, bei dem übliche Reaktionen des Fahrers auf Ereignisse auf dessen Betätigung von Bedienelementen des Fahrzeugs ermittelt werden und aus Abweichungen von dessen üblichen Reaktionen auf einen müden oder ausgeruhten Fahrer geschlossen wird.

Aus der WO 01/60254 A1 ist es bekannt, zur Erkennung der Ermüdung eines Fahrers in einem Fahrzeug eine von außen aufgebrachte Lenkauslenkung mit der Fahrerreaktion hierauf zu vergleichen. Die Lenkauslenkung geht entweder auf eine Straßenunebenheit zurück oder wird über einen Aktuator erzeugt. Der Unterschied im Verlauf der Lenkauslenkung im Vergleich zur Fahrerreaktion stellt ein Maß für die Ermüdung dar. Je kleiner die durch Integration erhaltene Fläche zwischen den Verläufen ist, umso besser ist die Fahrerreaktion. Voraussetzung für die Müdigkeitserkennung ist aber die äußere Anregung auf das Lenksystem.

Aus der WO 2007/031619 A1 ist es bekannt, zur Haftungserkennung das Lenkmomentsignal einer statistischen Analyse zu unterziehen, wobei auf Haftung erkannt wird, wenn die Varianz der gemessenen Lenkmomentsignale einen Schwellenwert übersteigt. Ein Verfahren zur Müdigkeitserkennung ist in dieser Druckschrift aber nicht gezeigt.

Aus der WO 02/17787 A1 ist es bekannt, als Maßstab für die Interaktion zwischen Fahrer und Fahrzeug einen Lenkimpuls im Lenksystem zu generieren und die vom Fahrer erzeugte Reaktion zu messen, wobei sich der Impuls innerhalb des Lenkrauschens bewegen soll, was eine Gefährdung ausschließen soll.

In der US 4 496 938 wird ein Verfahren zur Müdigkeitserkennung beschrieben, bei dem Lenksignale ausgewertet werden und ein Alarmsignal erzeugt wird, wenn eine bestimmte Anzahl an Lenkausschlägen einen vorbestimmten Wert erreicht hat. Allerdings setzt dieses Verfahren einen stationären Fahrzeugzustand voraus, bei dem das Fahrzeug hinsichtlich der Gangwahl und bestimmter Zustandsgrößen wie die Fahrzeuggeschwindigkeit vorgegebene Bedingungen erfüllen muss. Nur in diesem Fall werden die Lenkausschläge für das Verfahren zur Erkennung von Fahrermüdigkeit ausgewertet.

### Offenbarung der Erfindung

Die Erfindung betrifft ein Verfahren zur Erkennung der Ermüdung eines Fahrers eines Fahrzeugs, bei dem eine das vom Fahrer auf das Lenkrad aufgebrachte Drehmoment repräsentierende Drehmomentgröße erfasst wird und anhand der Drehmomentgröße und insbesondere dem zeitlichen Verlauf der Drehmomentgröße das Vorhandensein einer Ermüdung des Fahrers detektiert wird. Diese Erfindung ermöglicht auf einfache und unaufwendige Art die Erkennung einer Ermüdung eines Fahrers.

Eine Ermüdung des Fahrers wird als vorliegend detektiert, wenn eine ruckartige Änderung der Drehmomentgröße detektiert wird.

Die Erfindung ist dadurch gekennzeichnet, dass eine Ermüdung des Fahrers dann als vorliegend detektiert wird, wenn die Drehmomentgröße
- während eines ersten Zeitintervalls vorgegebener Länge einen vorgegebenen ersten Schwellenwert unterschreitet,
- während eines späteren zweiten Zeitintervalls vorgegebener Länge einen vorgegebenen zweiten Schwellenwert überschreitet, und
- der zeitliche Abstand zwischen dem Ende des ersten Zeitintervalls und dem Beginn des zweiten Zeitintervalls einen dritten Schwellenwert unterschreitet.
Dadurch ist auf einfache Art und Weise die Detektion einer ruckartigen Drehmomentänderung möglich.

Eine vorteilhafte Ausgestaltung der Erfindung ist dadurch gekennzeichnet,
- dass das Lenkrad mit einem einen Elektromotor aufweisenden zumindest teilweise elektrischen Lenksystem verbunden oder wirkverbunden ist und
- dass eine Ermüdung des Fahrers nur dann als vorliegend detektiert wird, wenn die ruckartige Änderung der Drehmomentgröße zu einer Änderung der Läuferstellung des Elektromotors geführt hat.
Dadurch wird verifiziert, dass die Änderung der Drehmomentgröße auf einer Lenkbewegung des Fahrers beruht.

Eine vorteilhafte Ausgestaltung der Erfindung ist dadurch gekennzeichnet, dass es sich bei dem Lenksystem um ein Electronic-Power-Steering-System handelt.

Eine vorteilhafte Ausgestaltung der Erfindung ist dadurch gekennzeichnet, dass die Drehmomentgröße mittels eines Drehmomentsensors erfasst wird.

Eine vorteilhafte Ausgestaltung der Erfindung ist dadurch gekennzeichnet, dass der Drehmomentsensor an der Lenksäule angebracht ist.

Eine vorteilhafte Ausgestaltung der Erfindung ist dadurch gekennzeichnet, dass im Falle einer detektierten Ermüdung des Fahrers eine Fahrerwarnung oder eine Fahrerinformation erzeugt wird.

Weiter umfasst die Erfindung eine Vorrichtung, enthaltend Mittel, die zur Durchführung der vorstehenden Verfahren ausgestaltet sind.

Die Zeichnung umfasst die Figuren 1 bis 3.
Fig. 1 zeigt eine Lenkung mit Drehmomentsensorik.
Fig. 2 zeigt einen typischen Bewegungsablauf bei Ermüdung.
Fig. 3 zeigt den Ablauf des erfindungsgemäßen Verfahrens.

Die Erfindung beruht auf dem Vorhandensein einer eine Lenkbewegung oder Lenkradbewegung erfassenden Drehmomentsensorik im Kraftfahrzeug. Diese ist beispielsweise bei EPS-Systemen (EPS = "Electronic Power Steering") vorhanden und kann zusätzlich zur Ermüdungserkennung des Fahrers genutzt werden. Die beim EPS-System vorhandene Drehmomentsensorik weist eine sehr hohe Signalauflösung auf und kann somit geringste Drehmomentänderungen am Lenkrad detektieren. Zur Verifizierung, dass die ermittelte Drehmomentänderung vom Fahrer herrührt, kann das Ausgangsignal des Drehmomentsensors mit dem Ausgangssignal des Motorlagesensors des EPS-Systems verglichen werden. Das Signal der vom Fahrer herrührenden Drehmomentänderung muss zeitlich vor dem Motorlageänderungssignal und vor dem daraus gewonnenen Lenkwinkelsignal vorhanden sein, da die vom EPS-System benötigte Regelzeit eine Zeitverzögerung bewirkt, d.h. ein vom Fahrer aufgebrachtes Lenkradmoment führt erst nach einem Zeitverzug zu einer Aktivierung des EPS-Motors.

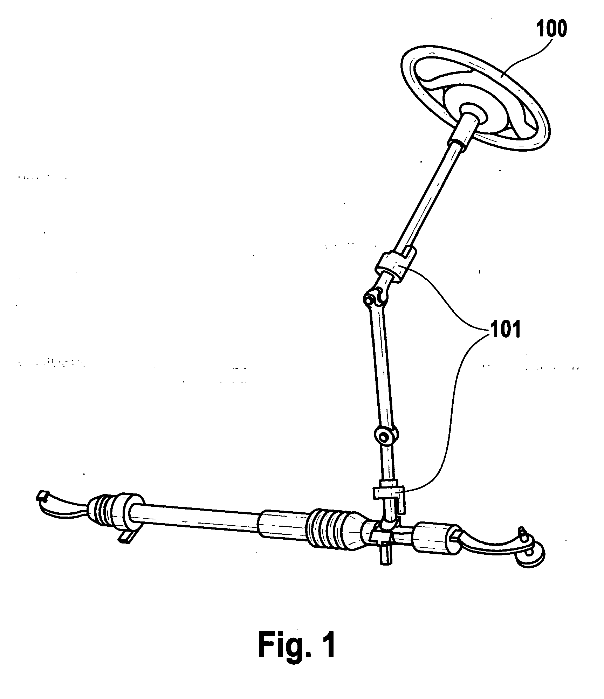

Bei einer Ermüdung des Fahrers bringt dieser eine ruckartige oder sprungförmige Kraft aufgrund von Muskelkontraktionen auf das Lenkrad auf, welche ein Drehmoment erzeugt. Diese Drehmomentänderung wird durch eine Drehmomentsensor detektiert. Dazu wird auf Fig. 1 verwiesen. Dort kennzeichnet 100 das Lenkrad und 101 kennzeichnet zwei mögliche Einbauorte eines Drehmomentsensors, dies sind die obere bzw. untere Lenksäule. Der EPS-Motor muss dabei unterhalb des Drehmomentsensors platziert sein, d.h. der Drehmomentsensor muss sich zwischen Lenkrad und EPS-Motor befinden, damit er das Fahrerdrehmoment erfasst.

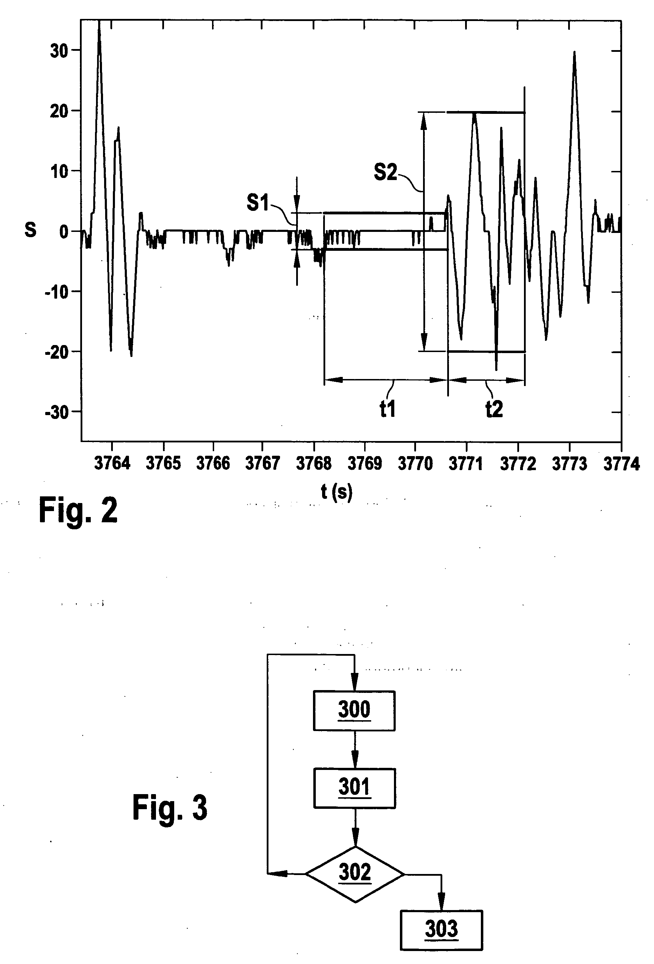

In Fig. 2 ist in Abszissenrichtung die Zeit t in Sekunden und in Ordinatenrichtung ein eine die Fahreraktivität S repräsentierende Größe aufgetragen. Bei dieser Größe kann es sich beispielsweise um das Lenkraddrehmoment M handeln.

Diese Abbildung zeigt einen typischen Bewegungsablauf, der zuerst eine zeitlich ruhende Phase t1 aufweist, in welcher der Fahrer wenig Aktivität aufweist. Die geringe Aktivität wird dadurch festgestellt, dass der Betrag von S stets den Schwellenwert S1 unterschreitet. Diese Phase t1 ist von einem sich über das Zeitintervall t2 erstreckenden ruckartigen Bewegungsablauf gefolgt, in welcher der Schwellenwert D2 erreicht bzw. überschritten wird. Diese Musterabfolge stellt einen typischen Ablauf der Fahrerlenkbewegung bei Übermüdung dar. Durch die Ermüdung zeigt der Fahrer im Zeitintervall t2 ein schnelles ruckartiges Hin- und Herbewegen des Lenkrads.

Dieses zeitliche Bewegungsschema wird mit Hilfe eines Drehmomentsensors gemessen und anschließend über einen Algorithmus analysiert. Bei der Analyse einer Fahrerermüdung kann einem weiteren System diese Information zur Verfügung gestellt werden, um den Fahrer beispielsweise mittels einer optischen, akustischen oder haptischen Warninformation auf sein Übermüdung aufmerksam zu machen.

Es ist auch möglich, das beschriebene System zur Plausibilisierung eines weiteren Ermüdungserkennungssystems zu verwenden. Dabei kann es sich beispielsweise um ein Vision-System handeln, welches die Augen- und Lidbewegungen des Fahrers detektiert und anhand dieser auf die Ermüdung des Fahrers geschlossen wird. Auch durch eine Lenkwinkelsensorik kann ein Profil der Fahrerlenkbewegungen erstellt werden, woraus wiederum auf eine Ermüdung geschlossen werden kann.
Neben der Ermüdungserkennung können mit der Erfindung auch weitere Bewegungsmuster des Fahrers analysiert werden, z.B. Ausweichmanöver oder eine "sportliche Fahrweise".

Der grundlegende Ablauf des erfindungsgemäßen Verfahrens ist in Fig. 3 dargestellt. Nach dem Start des Verfahrens in Block 300 wird in Block 301 eine das vom Fahrer auf das Lenkrad aufgebrachte Drehmoment repräsentierende Drehmomentgröße erfasst. Anschließend wird in Block 302 abgefragt, ob eine ruckartige Änderung der Drehmomentgröße vorliegt. Liegt eine ruckartige Änderung der Drehmomentgröße vor, dann wird in Block 303 das Vorhandensein einer Ermüdung des Fahrers detektiert wird. Wird in Block 302 jedoch keine ruckartige Änderung der Drehmomentgröße detektiert, dann wird zu Block 300 zurückverzeigt und das Verfahren wird von neuem durchgeführt.

## Patentansprüche

1. Verfahren zur Erkennung der Ermüdung eines Fahrers eines Fahrzeugs, bei dem eine das vom Fahrer auf das Lenkrad (100) aufgebrachte Drehmoment repräsentierende Drehmomentgröße erfasst (301) und anhand der Drehmomentgröße das Vorhandensein einer Ermüdung des Fahrers detektiert wird (303), **dadurch gekennzeichnet, dass** eine Ermüdung des Fahrers dann als vorliegend detektiert wird, wenn die Drehmomentgröße
- während eines ersten Zeitintervalls vorgegebener Länge einen vorgegebenen ersten Schwellenwert (S1) unterschreitet,
- während eines späteren zweiten Zeitintervalls vorgegebener Länge einen vorgegebenen zweiten Schwellenwert (S2) überschreitet, und - der zeitliche Abstand zwischen dem Ende des ersten Zeitintervalls und dem Beginn des zweiten Zeitintervalls einen dritten Schwellenwert unterschreitet.

2. Verfahren nach Anspruch 1, **dadurch gekennzeichnet, dass** die Drehmomentgröße mittels eines Drehmomentsensors (101) erfasst wird.

3. Verfahren nach Anspruch 2, **dadurch gekennzeichnet, dass** der Drehmomentsensor (101) an der Lenksäule angebracht ist.

4. Verfahren nach einem der Ansprüche 1 bis 3, **dadurch gekennzeichnet, dass** im Falle einer detektierten Ermüdung des Fahrers eine Fahrerwarnung oder eine Fahrerinformation erzeugt wird.

5. Vorrichtung, enthaltend Mittel, die zur Durchführung der vorstehenden Verfahren ausgestaltet sind.

## Claims

1. Method for detecting the tiredness of a driver of a vehicle, in which a torque variable which represents the torque applied to the steering wheel (100) by the driver is sensed (301) and on the basis of the torque variable the presence of tiredness on the part of the driver is detected (303), **characterized in that** tiredness on the part of the driver is then detected as being present if the torque variable
- undershoots a predefined first threshold value (S1) during a first time interval of predefined length,
- exceeds a predefined second threshold value (S2) during a later second time interval of predefined length, and
- the distance in time between the end of the first time interval and the start of the second time interval undershoots a third threshold value.

2. Method according to Claim 1, **characterized in that** the torque variable is sensed by means of a torque sensor (101).

3. Method according to Claim 2, **characterized in that** the torque sensor (101) is mounted on the steering column.

4. Method according to one of Claims 1 to 3, **characterized in that** when tiredness on the part of the driver is detected, a driver warning or driver information is generated.

5. Device containing means which are configured to carry out the above methods.

## Revendications

1. Procédé de détection de la fatigue d'un conducteur d'un véhicule dans lequel une grandeur du couple de rotation représentant le couple de rotation appliqué par le conducteur sur le volant de direction (100) est déterminée (301) et que la présence d'une fatigue du conducteur est détectée à l'aide de la grandeur du couple de rotation (303), **caractérisé en ce qu'**une fatigue du conducteur est détectée comme présente lorsque la grandeur du couple de rotation :
- passe en dessous d'une première valeur seuil (S1) prédéfinie pendant un premier intervalle de temps de longueur prédéfinie ;
- passe en dessus d'une deuxième valeur seuil (S2) prédéfinie pendant un deuxième intervalle de temps ultérieur de longueur prédéfinie ; et
- l'écart de temps entre la fin du premier intervalle de temps et le début du deuxième intervalle de temps se situe en dessous d'une troisième valeur seuil.

2. Procédé selon la revendication 1, **caractérisé en ce que** la grandeur du couple de rotation est déterminée à l'aide d'un capteur de couple de rotation (101).

3. Procédé selon la revendication 2, **caractérisé en ce que** le capteur de couple de rotation (101) est placé au niveau de la colonne de direction.

4. Procédé selon l'une quelconque des revendications 1 à 3, **caractérisé en ce qu'**en cas de fatigue détectée du conducteur, le conducteur en est averti ou informé.

5. Dispositif contenant des moyens conçus pour mettre en oeuvre le procédé précédemment décrit.
